# EUROPEAN PATENT APPLICATION

(11) **EP 4 675 585 A1**
(43) Date of publication of application: **07.01.2026**
(21) Application number: 25170155.3
(22) Date of filing: 11.04.2025
(51) Int. Cl.: G08B 17/06, G08B 29/18, G08B 25/00, G08B 26/00

(54) **A FIRE DETECTION SYSTEM AND METHOD**

(30) Priority: 02.07.2024 NO 20240712
(71) Applicant: Norphonic AS, 5155 Bønes (NO)
(72) Inventor: ZAIKONNIKOV, Eugene, 5155 BØNES (NO)
(74) Representative: Zacco Norway AS

(57) **Abstract**

A fire detection system for a pathway (1) inside a tunnel or any other confined space or room comprises a plurality of first temperature sensors (A₁₋ₙ) and a plurality of second temperature sensors (B₁₋ₙ) arranged in nodes along the pathway (1). The first temperature sensors (A₁₋ₙ) are facing in one direction along the pathway and the second temperature sensors (B₁₋ₙ) are facing in the opposite direction along the pathway. The temperature sensors (A₁₋ₙ, B₁₋ₙ) are connected to a common control system (8) and configured for reporting temperature change on command or at predetermined time intervals. The invention uses spatial and geometric information to confirm if a fire is present between neighbouring nodes.

## Description

### Technical field of the invention

The invention concerns a system and a method for detecting fire based on sensed temperatures, as set out by the preambles of claims 1 and 6 respectively. The invention is particularly useful for detecting fires in enclosed spaces such as tunnels and corridors.

### Background of the invention

Fire inside a tunnel may be extremely hazardous and cause substantial damage. Most tunnels have restricted airflow, which can lead to rapid accumulation of toxic smoke and gases. This can cause visibility to drop dramatically and make it difficult for people to breathe. The confined space of a tunnel allows heat to build up quickly, creating extremely high temperatures that can weaken the tunnel structure and pose severe risks to anyone inside. In addition, tunnels often have limited exits and escape routes, making evacuation challenging and potentially trapping individuals inside. Smoke can also spread rapidly due to the linear nature of the tunnel, endangering people far from the actual fire location.

Many road tunnels therefore have systems installed to detect fire as soon as possible. Examples of such detection systems include cameras inside the tunnel and advanced image processing to detect smoke or flames visually, infrared cameras that detect heat signatures before a fire becomes visually apparent, carbon monoxide and gas detectors, systems using a combination of video analytics, thermal imaging, and other sensors to automatically detect unusual events (such as stopped vehicles or abnormal temperature increases), and wireless sensor networks that use a combination of temperature, smoke, and gas sensors placed throughout the tunnel to provide comprehensive coverage and early detection capabilities. These detection systems are often integrated into a centralized control system that can alert emergency services, activate ventilation systems, and guide evacuation procedures to manage tunnel fires effectively. However, identifying the exact location of a tunnel fire has proved to be difficult.

A shortcoming of existing sensory fire detection methods is the inability to exclude false positives. For example, a truck (lorry) parked near a heat sensor can radiate heat sufficient for triggering a temperature anomaly and detection signal. One remedy for avoiding such false positives is to use an additional sensor technology, such as smoke detectors. However, smoke detectors work poorly in dirty atmospheres and require frequent maintenance.

The prior art includes CN 103969699 B, which describes a fire source location method based on sensor array and dynamic optimization. The method includes the first step of converting temperature signals collected in the sensor array into azimuth angle estimation, the second step of calculating a fusion angle estimation value and the variance of the fusion angle estimation value of the sensor array through a mathematical statistic method, the third step of obtaining coordinates of a vertex of the boundary of a fire source location area according to analytical geometry knowledge, the fourth step of establishing a dynamic optimization objective function according to coordinate information of the vertex of the boundary, and the fifth step of calculating the position of a fire source through a convex optimization tool. Through the method based on dynamic optimization, the coordinates of the fire source and the location error radius of the fire source can be calculated simultaneously.

The prior art also includes CN 102519598 A, which describes a fire source positioning method based on statistic characteristics of a sensor array. The method comprises the steps of: carrying out grey correlation degree analysis on temperature signals collected in the sensor array so as to obtain smoke propagation delay; then obtaining azimuth angle estimation according to a propagation model and a geometrical relationship; and, regarding the azimuth angle estimation as a random vibration defined by a mean value and a variance on the basis of a statistical modelling method, so that fire source point estimation is converted to an area range estimation of a fire source; and finally, establishing an area range of fire source positioning estimation in a two-group array intersection manner, and taking an area center as point estimation of a position of the fire source.

### Summary of the invention

The invention is set forth and characterized in the main claim, while the dependent claims describe other characteristics of the invention.

It is thus provided a fire detection system, comprising a plurality of first temperature sensors and a plurality of second temperature sensors arranged along a pathway;
- wherein the first temperature sensors and the second temperature sensors are arranged in respective nodes, each node comprising a pair comprising a first temperature sensor and a second temperature sensor, and each node being arranged at respective locations along the pathway;
characterized in that:
- the first temperature sensors are facing in one direction along the pathway, and the second temperature sensors are facing in the opposite direction along the pathway;
- wherein the temperature sensors are connected to a common control system and configured for reporting temperature change on command or at predetermined time intervals.

**In** one embodiment, the control system is configured to compare a temperature change communicated from a second sensor in a first node within a time period, with a temperature change communicated from a first sensor in an adjacent second node within the same time period, and to generate an alarm signal to indicate a fire if the communicated temperature changes are consistent and exceed a predetermined value.

**In** one embodiment, the node comprises a housing having an opening for each sensor. The pathway may be a predefined pathway, for example inside a tunnel or any other confined space or room.

It is also provided a fire detection method, characterized by:
a) recording temperature, temperature increase, or temperature increase rate detected by a first sensor during a time period;
b) during the same period, recording temperature, temperature increase, or temperature increase rate detected by adjacent sensors that cover one or more spatial regions covered by the first sensor; and
c) generating a signal to indicate that a fire is present within the detection range of said sensors if the recorded temperature, temperature increase, or temperature increase rate is above a threshold value for the first sensor and said adjacent sensors.

The method may be executed by the fire detection system according to the invention.

The invention uses spatial and geometric information to confirm if a fire is present between neighbouring nodes. For example, if a sensor in a first node detects a sudden temperature increase on one side, then a neighbouring second node on the same side should detect a similar temperature increase in the sensor facing the first node (although the temperature increase detected here might be weaker).

### Brief description of the drawings

These and other characteristics of the invention will become clear from the following description of an embodiment of the invention, given as a non-restrictive example, with reference to the attached schematic drawing in s, wherein
Figure 1 is a schematic illustration of an embodiment of the auditory guidance system according to the invention; and
Figure 2 is a perspective view of an embodiment of a node housing.

### Detailed description of embodiments of the invention

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

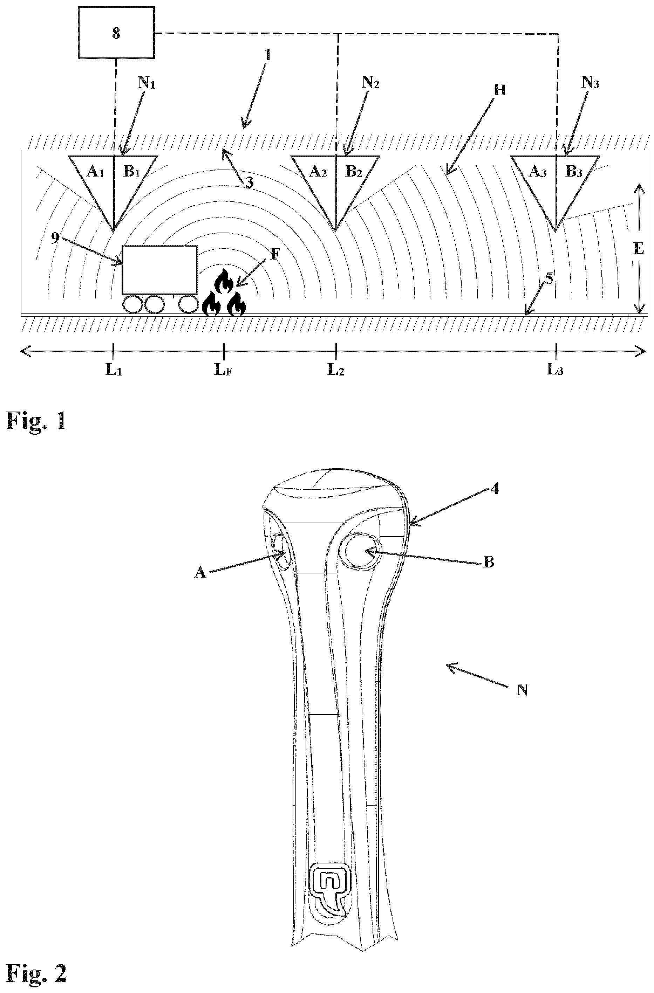

Referring to figure 1, the invented fire detection system comprises a plurality of first temperature sensors A and a plurality of second temperature sensors B arranged along a pathway 1. The pathway may be a roadway inside a tunnel or any other surface in a confined space (such as a mine shaft, rail tunnel, corridor) or room. The pathway may also be in the open, out of doors. In a practical application, the sensors A, B are arranged in pairs of first and second sensors at predetermined locations L along the pathway, for example on a wall along the pathway, in or near a ceiling 3 above the pathway, or on other suitable support. The sensors A, B are preferably arranged at an elevation E above the tunnel lower surface 5 (which may a road surface). Each sensor pair comprises a first sensor A and second sensor B facing in opposite directions along the pathway 1. In the illustrated embodiment, each sensor pair is arranged adjacent to each other in a node N and is arranged in a sealed housing 4 having an opening for each sensor (see figure 2). Other node configurations than the one illustrated in figure 2 are conceivable.

Each housing 4 is preferably arranged high up in the tunnel, for example three to four meters above the surface 5, to provide an improved line-of-sight over vehicles and/or other objects 9 and an additional sensitivity to convection heat component in a fire. The opposing but overlapping orientation in both directions along the pathway allows for spatial filtering of false positives. Each sensor reading is reported individually with attached direction data.

Each sensor A, B is configured for reporting temperature, temperature change, and/or temperature change rate, on command or at predetermined time intervals. In one embodiment, at least one of the sensors is configured for reporting temperature when the sensor records a temperature which exceeds a preceding temperature recording by the same sensor, by a predefined increment. In one embodiment, the temperature recordings are adjacent in time. As a non-limiting example, a sensor is configured to report temperature if the sensor records an increase of 0.2 °C from one temperature recording to the next.

The temperature data reported from each sensor is communicated to a common control system 8 by a method known in the art, and the control system generates an alarm signal to indicate a fire if the temperature change or rate of temperature change exceeds a predetermined value and if certain conditions, as explained below, are fulfilled. Fire detection thus comprises continuous reporting of temperature change data from individual sensors in individual nodes and continued analysis by the control system 8.

Each node runs its own basic pre-processing, ensuring that changes are reported only when they exceed the sensor's thermal noise threshold and that a reading is reported periodically (for example every 5 minutes). Each node and sensor are also configured for checking sensor health, detecting if they are "stuck" and re-initializing them if necessary. When the control system has no updated sensor reading from a node, the node is marked as faulty and reported further in the control system.

Figure 1 illustrates three nodes N₁₋₃ arranged at respective locations L₁₋₃ along the pathway 1, each node comprising a sensor pair A, B as described above. A second sensor B₁ in the first node N₁ and first sensor A₂ in the second node N₂ are facing each other, and a second sensor B₂ in the second node N₂ and a first sensor A₃ in the third node N₃ are facing each other. It should be understood that there may be several more nodes N than what the figure indicates, for example in a long tunnel. In general, therefore, a first sensor Aₙ₊₁ in one node and a second sensor Bₙ in another node are facing each other. Each sensor therefore covers - and is configured for sensing temperature in - a spatial region above the pathway. The distance between node locations may be known or be determined by the control system, in a manner known in the art. The distance between adjacent node locations may for example be between 10 and 30 meters, but this invention shall not be limited to such intervals. Each node, and thus each sensor, is connected to the control system 8 in a manner known in the art. Figure 1 illustrates a fire F at a location L_{F}, between the first and second nodes N₁, N₂, and reference letter H denotes heat radiated from the fire. Reference number 9 indicates a vehicle or other object that forms an obstacle between the fire F and the second sensor B₁ in the first node N₁. In this situation, heat radiated from the fire F is not detected - or detected as having a lower temperature - by the second sensor B₁ in the first node N₁, than the temperature detected by the first sensor A₂ in the second node N₂ and the first sensor A₃ in the third node N₃.

The first sensor A and the second sensor B may be any device capable of detecting radiated heat, and the coverage of each provides spatial information as to where the heat is coming from. Spatial and/or geometrical information is used to confirm heat (e.g. a fire) from nodes, and if a sensor in one node (e.g. second sensor B₁ in first node N₁) detects a temperature increase beyond predefined values, an opposite sensor in the adjacent node (e.g. first sensor A₂ in second node N₂), should detect a similar temperature increase (although maybe at a lower intensity). Due to inverse square law of heat radiation, this would quickly happen for a powerful source (e.g. a 2-3 MW fire, typical for a small vehicle) but not for occasional small sources like the idling engine of a truck 9 nearby. Using the spatial information and by appropriate design, the system or devices may determine the presence of a fire with a high degree of certainty while preventing false alarms.

In general, therefore, a method according to the invention comprises:
a) recording temperature, temperature increase, or temperature increase rate detected by a first sensor Aₙ₊₁ during a time period;
b) during the same period, recording temperature, temperature increase, or temperature increase rate detected by adjacent sensors Bₙ, Aₙ₊₂ that cover one or more spatial regions covered by the first sensor Aₙ₊₁;
c) If the recorded temperature, temperature increase, or temperature increase rate is above a threshold value for the first sensor and said adjacent sensors, generate a signal to indicate that a fire F is present within the detection range of said sensors.

## Claims

1. A fire detection system comprising a plurality of first temperature sensors (A₁₋ₙ) and a plurality of second temperature sensors (B₁₋ₙ) arranged along a pathway (1);
- wherein the first temperature sensors (A₁₋ₙ) and the second temperature sensors (B₁₋ₙ) are arranged in respective nodes (N₁₋ₙ), each node comprising a pair comprising a first temperature sensor (A₁₋ₙ) and a second temperature sensor (B₁₋ₙ), and each node being arranged at respective locations (L₁₋ₙ) along the pathway (1);
**characterized in that:**
- the first temperature sensors (A₁₋ₙ) are facing in one direction along the pathway and the second temperature sensors (B₁₋ₙ) are facing in the opposite direction along the pathway;
- wherein the temperature sensors (A₁₋ₙ, B₁₋ₙ) are connected to a common control system (8) and configured for reporting temperature change on command or at predetermined time intervals.

2. The fire detection system of claim 1, wherein the control system (8) is configured to compare a temperature change communicated from a second sensor (B₁) in a first node (N₁) within a time period, with a temperature change communicated from a first sensor (A₂) in an adjacent second node (N₂) within the same time period, and to generate an alarm signal to indicate a fire (F) if the communicated temperature changes are consistent and exceed a predetermined value.

3. The fire detection system of claim 1 or claim 2, wherein the node comprises a housing (4) having an opening for each sensor.

4. The fire detection system of any one of claims 1-3, wherein the pathway (1) is a predefined pathway.

5. The fire detection system of any one of claims 1-4, wherein the pathway (1) is inside a tunnel or any other confined space or room.

6. A fire detection method, **characterized by:**
a) recording temperature, temperature increase, or temperature increase rate detected by a first sensor (Aₙ₊₁) during a time period;
b) during the same period, recording temperature, temperature increase, or temperature increase rate detected by adjacent sensors (Bₙ, Aₙ₊₂) that cover one or more spatial regions covered by the first sensor (Aₙ₊₁); and
c) generating a signal to indicate that a fire (F) is present within the detection range of said sensors if the recorded temperature, temperature increase, or temperature increase rate is above a threshold value for the first sensor and said adjacent sensors.

7. The method of claim 6, executed by the fire detection system as defined by any one of claim 1-5.
